# EUROPÄISCHE PATENTSCHRIFT

(11) **EP 3 997 342 B1**
(45) Veröffentlichungstag und Bekanntmachung des Hinweises auf die Patenterteilung: **04.03.2026**
(21) Anmeldenummer: 20740232.2
(22) Anmeldetag: 07.05.2020
(51) Int. Cl.: F04D 25/06, F04D 25/08, F04D 27/00

(54) **VENTILATOR UND VERFAHREN ZUM BESTIMMEN EINES DURCH DEN VENTILATOR BEWEGTEN MEDIENSTROMS**
VENTILATOR AND METHOD FOR DETERMINING A FLOW OF MEDIA MOVED BY THE VENTILATOR
VENTILATEUR ET PROCÉDÉ POUR DÉTERMINER UN FLUX DE FLUIDE DÉPLACÉ PAR CE VENTILATEUR

(30) Priorität: 13.06.2019 DE 102019208640
(43) Veröffentlichungstag der Anmeldung: 18.05.2022
(73) Patentinhaber: Ziehl-Abegg SE, 74653 Künzelsau (DE)
(72) Erfinder: OBST, Raphael Simon, 74613 Öhringen (DE); KAMMERER, Matthias Carsten, 74635 Kupferzell (DE); KRCMAR, Mato Mathias, 74613 Öhringen (DE); LOERCHER, Frieder, 74542 Braunsbach (DE); HEROLD, Alexander, 74239 Hardthausen (DE)
(74) Vertreter: Ullrich & Naumann PartG mbB
(86) Internationale Anmeldenummer: PCT/DE2020/200033
(87) Internationale Veröffentlichungsnummer: WO 2020/249168

(56) Entgegenhaltungen:
- EP-A1- 3 045 733
- WO-A1-2017/084694
- DE-A1- 102015 219 150
- DE-A1- 102017 122 238

## Beschreibung

Die Erfindung betrifft einen Ventilator mit Mitteln zum Bestimmen eines durch den Ventilator bewegten Medienstroms, umfassend einen Elektromotor und ein durch den Elektromotor angetriebenes Laufrad, wobei das Laufrad ein gasförmiges Medium in einem Medienstrom von einer Zuströmseite zu einer Abströmseite bewegt.

Die Erfindung betrifft ferner ein entsprechendes Verfahren.

Ein Ventilator besteht in typischer Weise aus einem Elektromotor und einem durch diesen Elektromotor angetriebenes Laufrad. Der Elektromotor weist einen Stator und einen relativ zu dem Stator drehbar gelagerten Rotor auf. Der Rotor ist mit dem Laufrad gekoppelt.

Während des Betriebs fördert der Ventilator einen Luftstrom - nachfolgend auch allgemein als Medienstrom bezeichnet - von der Zuströmseite (meist) durch eine Einlaufdüse und durch das Laufrad auf eine Abströmseite. Auf der Zuströmseite liegt dabei ein Druck p₁ vor, auf der Abströmseite ein Druck p₂. Dabei zeigt sich, dass in der Regel eine eindeutige Zuordnung einer Druckdifferenz Δp = p₂ - p₁ zu einem durch den Ventilator bewegten Medienstrom hergestellt werden kann. Die diese Zuordnung kennzeichnende Kennlinie wird häufig auch als "Kennlinie der statischen Druckerhöhung" bezeichnet, wobei die Kennlinie auf eine Kalibrierdrehzahl und einer Kalibrierluftdichte bezogen ist und meist während Kalibrierungsmessungen gewonnen werden kann.

Da in sehr guter Näherung der Volumenstrom proportional zur Drehzahl und die Druckdifferenz proportional zum Quadrat der Drehzahl ist, kann bei beliebiger, aber bekannter Drehzahl diese Kennlinie zur Bestimmung des aktuellen Luftvolumenstroms genutzt werden. Denn aus einer gemessenen aktuell vorliegenden Druckdifferenz und einer aktuell vorliegenden Drehzahl kann durch Nutzung dieser Zusammenhänge auf die Kennlinie zurückgerechnet werden.

Die Druckdifferenz Δp ist auch proportional zur Luftdichte, wodurch bei bekannter oder abgeschätzter Luftdichte ebenfalls die Kennlinie genutzt werden kann, auch wenn nicht die Kalibrierluftdichte vorliegt. Damit lässt sich ein Luftvolumenstrom bestimmen. Da sowohl die Druckdifferenz Δp als auch der Luftmassenstrom proportional zur Dichte ist, kann ohne Kenntnis der Dichte direkt ein Luftmassenstrom bestimmt werden. Somit kann aus einer gemessenen Druckdifferenz Δp, einer bekannten Ventilatordrehzahl und einer bekannten oder abgeschätzten Dichte im laufenden Ventilatorbetrieb der Luftvolumenstrom bzw. ohne Kenntnis der Dichte der Luftmassenstrom bestimmt werden. Diese Werte für Volumenstrom oder Massenstrom können in einer übergeordneten Regelung eingesetzt werden, wenn beispielsweise in einem Anwendungsszenarium ein vorgegebenes Luftvolumen pro Zeiteinheit bewegt werden soll.

Nachteilig an dieser Volumenstrom- bzw. Massenstrombestimmung ist, dass die Drücke p₁ und p₂ zwar problemlos bei Kalibrierungsmessungen gemessen werden können. Allerdings ist die Messung in praktischen Einsatzszenarien schwierig, da zusätzliche Drucksensoren installiert und mit einer Auswerteeinheit verkabelt werden müssen. Nicht selten können diese Sensoren aus Platzgründen oder aus Gründen der Robustheit aber nicht installiert werden. Zudem erhöht die Verkabelung der Sensoren den Installationsaufwand erheblich. Daher sind diese Verfahren in der Praxis häufig nicht praktikabel und teuer.

Aus der DE 10 2015 219 150 A1 ist eine Sensoranordnung bekannt, die in einem Elektronikgehäuse eines Elektromotors integriert ist. Eine Druckdurchführung und Druckschläuche verbinden den Sensor innerhalb des Elektromotors mit dem jeweiligen Messort außerhalb des Motors. Diese Anordnung bietet den Vorteil, dass lediglich Druckschläuche zu den Messorten verlegt werden müssen und eine externe Verkabelung von Sensoreinheiten entfällt. Damit reduziert sich der Installationsaufwand erheblich. Dennoch ist das Verlegen der Druckschläuche notwendig, was immer noch einen nicht unerheblichen Installationsaufwand erzeugt und nicht in allen Einsatzszenarien möglich ist.

Aus der EP 3 045 733 A1 ist ein Ventilator mit den Merkmalen der Präambel des Anspruchs 1 bekannt.

Der vorliegenden Erfindung liegt daher die Aufgabe zugrunde, einen Ventilator und ein Verfahren der eingangs genannten Art derart auszugestalten und weiterzubilden, dass ein Bestimmen eines Volumenstroms oder eines Massenstroms eines Mediums mit geringem Aufwand zuverlässig möglich ist.

Erfindungsgemäß wird die voranstehende Aufgabe durch die Merkmale des Anspruchs 1 gelöst. Danach weist der in Rede stehende Ventilator ein Drucksensorsystem, ein Drehzahlermittlungssystem und eine Auswerteeinheit auf,
wobei das Drucksensorsystem dazu ausgebildet ist, eine Ist-Druckdifferenz zwischen einem ersten Bereich und einem zweiten Bereich zu ermitteln, wobei der erste Bereich und/oder der zweite Bereich in dem Elektromotor ausgebildet sind/ist, wobei in dem ersten Bereich ein Druck herrscht, der mit einem zuströmseitig vorhandenen Druck korrespondiert, wobei in dem zweiten Bereich ein Druck herrscht, der mit einem abströmseitig vorhandenen Druck korrespondiert,
wobei das Drehzahlermittlungssystem dazu ausgebildet ist, eine Ist-Drehzahl des Laufrads zu ermitteln, und
wobei die Auswerteeinheit dazu ausgebildet ist, basierend auf der Ist-Druckdifferenz, der Ist-Drehzahl und einer Druckkennlinie des Ventilators einen Massenstrom und/oder einen Volumenstrom des Mediums zu bestimmen. Weiterhin umfasst der Ventilator ein Schott, das innerhalb des Elektromotors ausgebildet ist, wobei das Schott einen Druckausgleich zwischen dem ersten Bereich und dem zweiten Bereich unterbindet oder zumindest erheblich reduziert.

Hinsichtlich des Verfahrens wird die voranstehende Aufgabe durch die Merkmale des Anspruchs 12 gelöst. Danach umfasst das Verfahren die Schritte:
Ermitteln einer Ist-Druckdifferenz zwischen einem ersten Bereich und einem zweiten Bereich, wobei der erste Bereich und/oder der zweite Bereich in dem Elektromotor ausgebildet sind/ist, wobei in dem ersten Bereich ein Druck herrscht, der mit einem zuströmseitig vorhandenen Druck korrespondiert, wobei in dem zweiten Bereich ein Druck herrscht, der mit einem abströmseitig vorhandenen Druck korrespondiert,
Ermitteln einer Ist-Drehzahl des Laufrads und
Bestimmen eines Massenstroms und/oder eines Volumenstroms des Mediums basierend auf der Ist-Druckdifferenz, der Ist-Drehzahl und einer Druckkennlinie des Ventilators.

In erfindungsgemäßer Weise ist zunächst erkannt worden, dass für das Bestimmen eines durch den Ventilator bewegten Medienstroms nicht zwingend die zuströmseitigen und abströmseitigen Drücke p₁ und p₂ gemessen werden müssen. Vielmehr ist erkannt worden, dass der Medienstrom auch nahe bei dem Motor und/oder in dem Motor Druckveränderungen hervorruft, die sich ebenso für das Bestimmen des Medienstroms eignen. Es ist erkannt worden, dass diese motornah und/oder im Motor gemessenen Drücke vollkommen analog zu den Drücken p₁ und p₂ genutzt werden können und eine analoge Dichte- und Drehzahlabhängigkeit von einer Druckkennlinie vorliegt. Lediglich die Druckkennlinie muss dann auf die erfindungsgemäß eingesetzte Sensorik angepasst werden, was in der Praxis jedoch keine Hürde darstellt. Auf diese Weise lässt sich ein Ventilator bzw. ein Elektromotor ausgestalten, bei dem sich ohne die Notwendigkeit von externen Sensoren oder zu bestimmten Messorten außerhalb des Elektromotors geführten Schläuchen ein Massenstrom und/oder ein Volumenstrom des durch den Ventilator bewegten Mediums quantitativ bestimmen lässt. Hierdurch kann eine quantitative Aussage über den Massenstrom und/oder den Volumenstrom getroffen werden. Dies bedeutet, dass ein quantitatives Bestimmen des Massenstroms und/oder des Volumenstroms möglich ist.

Der erfindungsgemäße Ventilator weist hierzu ein Drucksensorsystem, ein Drehzahlermittlungssystem und eine Auswerteeinheit auf. Das Drucksensorsystem ist dazu ausgebildet, eine Ist-Druckdifferenz zwischen einem ersten Bereich und einem zweiten Bereich zu ermitteln, wobei der erste Bereich und/oder der zweite Bereich in dem Elektromotor ausgebildet ist. Wo konkret der erste und zweite Bereich ausgebildet sind, hängt von der jeweiligen Ausgestaltung des Elektromotors, seiner relativen Lage zu dem Laufrad des Ventilators, dem generellen Aufbau des Ventilators und weiteren konstruktiven Faktoren ab. Wichtig dabei ist, dass in dem ersten Bereich ein Druck herrscht, der mit einem zuströmseitig vorhandenen Druck korrespondiert, und dass in dem zweiten Bereich ein Druck herrscht, der mit einem abströmseitig vorhandenen Druck korrespondiert. Wie konkret diese Korrespondenzen sind, ist für die vorliegende Erfindung letztendlich irrelevant, solange ein monotoner Zusammenhang zwischen den Drücken in dem ersten bzw. zweiten Bereich und der zuströmseitig oder abströmseitig vorhandenen Drücke herrscht. Dies bedeutet, dass zwischen den jeweilig korrespondierenden Drücken ein eindeutiger Zusammenhang vorliegen muss, der jedoch nicht zwingend bekannt sein muss. Denn schlussendlich werden diese Zusammenhänge in der Druckkennlinie abgebildet, so dass dort das Wissen über die Zusammenhänge einfließt.

Das Drehzahlermittlungssystem ist dazu ausgebildet, die Drehzahl des Laufrads zu ermitteln. Dieses Drehzahlermittlungssystem kann durch einen dedizierten Drehzahlsensor ausgebildet sein. Allerdings ist es auch - insbesondere bei elektronisch kommutierten Motoren (EC-Motor) - möglich, die aus der Motorelektronik vorhandenen Parameter zu nutzen. Meist wird die Drehzahl dort ohnehin für die Regelung benötigt und liegt somit bereits vor. In dieser Ausgestaltung kann das Drehzahlermittlungssystem auf diese bereits vorliegenden Werte zurückgreifen.

Die Auswerteeinheit ist dazu ausgebildet, basierend auf der ermittelten Ist-Druckdifferenz, der ermittelten Ist-Drehzahl und einer Druckkennlinie des Ventilators einen Massenstrom und/oder einen Volumenstrom des Mediums (quantitativ) zu bestimmen. Die Druckkennlinie gibt dabei einen Zusammenhang zwischen einer Druckdifferenz und einem sich bei einer Druckdifferenz jeweils einstellenden Volumenstroms wieder. Dabei ist die Druckkennlinie bei einer Kalibrierdrehzahl und einer Kalibrierluftdichte aufgenommen worden. Da - wie zuvor bereits ausgeführt - der Volumenstrom in sehr guter Näherung proportional zur Drehzahl und die Druckdifferenz proportional zum Quadrat der Drehzahl ist, kann unter Verwendung der Ist-Drehzahl auf die Druckkennlinie zurückgerechnet werden. Da die Druckdifferenz proportional zur Dichte des Mediums ist, kann aus einer bekannten oder abgeschätzten Dichte des Mediums auf eine Kalibrierdichte des Mediums zurückgerechnet werden. Wenn statt eines Volumenstroms des Mediums ein Massenstrom des Mediums bestimmt werden soll, kann die Druckkennlinie auch einen Zusammenhang zwischen einer Druckdifferenz und einem korrespondierenden Massenstrom wiedergeben. Damit entsteht insgesamt ein Ventilator, bei dem ein Volumenstrom bzw. ein Massenstrom des durch den Ventilator bewegten Mediums bestimmt werden kann, ohne dass umfangreiche Installationsmaßnahmen notwendig wären. Vielmehr sind die notwendige Sensorik und die notwendigen Einheiten bereits werkseitig in den Ventilator integrierbar, sodass am Einsatzort des Ventilators lediglich der Ventilator eingebaut und in Betrieb genommen werden muss.

Prinzipiell ist es unerheblich, wie der Ventilator konkret aufgebaut ist. Axialventilatoren können ebenso verwendet werden wie Radialventilatoren, Diagonalventilatoren oder Querstromventilatoren, um lediglich beispielhaft vier gängige Ventilatorarten zu nennen. Wichtig ist lediglich, dass ein durch das Laufrad des Ventilators bewegter Medienstrom zu den beschriebenen Druckabhängigkeiten in einem ersten und einem zweiten Bereich führt. Vorzugsweise ist der erfindungsgemäße Ventilator jedoch ein Radialventilator, dessen Motor zur Zuströmseite oder zur Abströmseite orientiert ist. Ohne Beschränkung der Allgemeinheit beziehen sich die nachfolgenden Ausführungen auf einen Elektromotor, der auf der Abströmseite des Ventilators angeordnet ist. Ein Fachmann wird aber verstehen, dass die nachfolgenden Ausführungen für andere Anordnungen des Elektromotors bezüglich des Ventilators entsprechend gelten.

Prinzipiell ist auch unerheblich, welches Medium durch den erfindungsgemäßen Ventilator gefördert wird. Der Ventilator kann verschiedenste gasförmige Medien bewegen, wobei der Ventilator vorzugsweise zur Förderung von Luft verwendet wird.

Dabei ist es letztendlich auch unerheblich, in welchem Einsatzszenario der Ventilator eingesetzt wird. Wesentlich ist, dass der Ventilator ein gasförmiges Medium bewegt. Für welchen Zweck dies geschieht, ist jedoch zweitrangig. So kann der Ventilator in einem Klimakasten die Oberfläche eines Wärmetauschers kühlen oder zur Be- oder Entlüftung eines Gebäudes oder eines Raumes dienen, um lediglich einige Anwendungen beispielhaft zu nennen.

In einer Ausbildung umfasst das Drucksensorsystem einen ersten Absolutdrucksensor und einen zweiten Absolutdrucksensor. Dabei misst der erste Absolutdrucksensor einen Druck, der in dem ersten Bereich herrscht und der zweite Absolutdrucksensor einen Druck, der in dem zweiten Bereich herrscht. Die Absolutdrucksensoren können dabei durch verschiedenste, aus der Praxis bekannte Sensoren implementiert sein. Wichtig ist lediglich, dass die Absolutdrucksensoren zur Messung des jeweils vorliegenden gasförmigen Mediums geeignet sind und für das Messen des jeweils vorliegenden Drucks empfindlich genug sind. Diese Anforderung ist jedoch einfach zu meistern.

Zur Messung des in dem ersten Bereich herrschenden Drucks kann der Absolutdrucksensor in dem ersten Bereich angeordnet sein. Auf diese Weise kann besonders einfach und ohne weitere konstruktive Maßnahmen der Druck in dem ersten Bereich ermittelt werden. Alternativ kann der erste Absolutdrucksensor auch außerhalb des ersten Bereichs angeordnet sein und über einen Schlauch mit dem ersten Bereich verbunden sein. Bei dieser alternativen Ausgestaltung ist an oder in dem ersten Absolutdrucksensor ein erster Messraum ausgebildet, der über den Schlauch mit dem ersten Bereich verbunden ist. Auf diese Weise herrscht in dem ersten Messraum ein annähernd gleicher Druck wie in dem ersten Bereich, so dass auch hierdurch der Druck in dem ersten Bereich zuverlässig gemessen werden kann. Durch Verwendung eines derartigen Schlauchs kann der Sensor flexibler angebracht werden, so dass der erste Bereich auch an Stellen ausgebildet sein kann, an denen für das Anbringen eines Sensors kein Platz wäre. Dennoch kann dieser Schlauch innerhalb des Elektromotors verlegt werden, sodass das Verlegen von Schläuchen bei der Installation des Ventilators in der Einsatzumgebung weiterhin entfällt.

Entsprechendes gilt für den zweiten Absolutdrucksensor, der in dem zweiten Bereich oder in einem über einen Schlauch mit dem zweiten Bereich verbundenen zweiten Messraum angeordnet sein kann. Die vorgenannten Ausführungen bezüglich des ersten Absolutdrucksensors gelten hier entsprechend.

In einer anderen Weiterbildung umfasst das Drucksensorsystem einen Differenzdrucksensor, der eine erste Sensorfläche und eine zweite Sensorfläche aufweist. Der Differenzdrucksensor erzeugt dann ein Sensorsignal, das von der Differenz der Drücke an der ersten Sensorfläche und an der zweiten Sensorfläche abhängt. Auf diese Weise muss die Ist-Druckdifferenz nicht aus gemessenen Absolutwerten berechnet werden, sondern liegt vielmehr unmittelbar vor. Bei dem derart ausgebildeten Drucksensorsystem ist die erste Sensorfläche des Differenzdrucksensors mit einem Druck in dem ersten Bereich beaufschlagt und die zweite Sensorfläche des Differenzdrucksensors mit einem Druck in dem zweiten Bereich. Dabei kann - ebenso wie bei der Ausgestaltung mit zwei Absolutdrucksensoren - die Sensorfläche in direktem Kontakt mit dem jeweiligen Bereich stehen oder ein Schlauch oder ein Luftkanal kann die jeweilige Sensorfläche druckmäßig mit dem zugeordneten Bereich verbinden. Geeignete Differenzdrucksensoren sind aus der Praxis hinlänglich bekannt.

Bei verschiedenen Elektromotoren kann es vorkommen, dass verschiedene Bereiche des Elektromotors derart in Verbindung zueinander stehen, dass unabhängig von abströmseitig oder zuströmseitig vorhandenen Drücken ein Druckausgleich innerhalb der einzelnen Bereiche stattfinden kann. Gemäß der Erfindung ist hier ein Schott vorgesehen , das innerhalb des Elektromotors ausgebildet ist. Das Schott unterbindet einen derartigen Druckausgleich oder reduziert ihn zumindest erheblich. Auf diese Weise können auch bei derartigen Elektromotoren erste und zweite Bereiche definiert werden. Ein derartiges Schott kann beispielsweise bei einem Elektromotor in Außenläuferbauweise an einem Übergang zwischen Lagerrohr und Elektronikgehäuse an der Starterbuchse angebracht sein.

In einer Ausgestaltung des ersten Bereichs ist dieser erste Bereich in einem Lagerrohr gebildet. Hierzu weist der Elektromotor eine besonders ausgebildete Motorwelle auf, um die sich der Rotor bzw. das mit dem Rotor gekoppelte Laufrad relativ zu dem Stator des Elektromotors drehen kann. Die Kopplung zwischen Laufrad und Rotor kann dabei derart erfolgen, dass das Laufrad über eine Rotorglocke mit der Motorwelle verbunden ist. Die Motorwelle wird dabei durch ein Lagerrohr des Elektromotors geführt und mittels mindestens eines Lagers drehbar gelagert. In der Praxis werden sehr häufig zwei Lager verwendet, wobei jeweils ein Lager in eines der beiden Enden des Lagerrohrs eingepresst ist. In dieser Ausgestaltung des ersten Bereichs weist die Motorwelle eine Durchführung auf, die eine Öffnung an einem stirnseitigen Ende der Motorwelle mit einer Öffnung an einer Längsseite der Motorwelle verbindet. Auf diese Weise gleicht sich der Druck in dem Lagerrohr dem an dem stirnseitigen Ende der Motorwelle vorherrschenden Druck an. Wenn das mit der Öffnung versehene stirnseitige Ende der Motorwelle zuströmseitig ausgerichtet ist, ist auf diese Weise ein erster Bereich im Lagerrohr gebildet. Es ist erkennbar, dass bei einer Ausrichtung des mit der Öffnung versehenen stirnseitigen Endes der Motorwelle zur Abströmseite prinzipiell auch ein zweiter Bereich in dem Lagerrohr gebildet werden kann.

Diese Durchführung ist vorzugsweise in Form einer Bohrung in der Motorwelle gebildet. Dabei kann eine im Wesentlichen zentrale Bohrung in Längsrichtung sowie eine Querbohrung an der Längsseite der Motorwelle die Durchführung bilden, wobei die zentrale Bohrung und die Querbohrung vorzugsweise ineinander übergehen. Welchen Durchmesser und welchen Querschnitt die Durchführung aufweist, ist weitgehend unerheblich, solange eine ausreichende Stabilität der Motorwelle verbleibt und ein ausreichender Druckausgleich zwischen der stirnseitigen Öffnung und der längsseitigen Öffnung gewährleistet ist. Auch ist weitgehend unerheblich, an welche Position in Längsrichtung die längsseitige Öffnung in der Motorwelle ausgebildet ist. Wichtig ist, dass die Öffnung nicht an dem Bereich angeordnet ist, an dem ein Lager aufgepresst wird. Diese Anforderung ist jedoch einfach zu erfüllen. Vorzugsweise ist die längsseitige Öffnung im Bereich der Mitte der Motorwelle ausgebildet, d.h. vorzugsweise im Bereich zwischen 40% und 60% der Länge der Motorwelle.

Zum Messen eines Drucks in dem Lagerrohr kann eine Sensoreinheit in dem Lagerrohr angeordnet sein. Eine derartige Sensoreinheit ist beispielsweise aus der DE 10 2018 211 833 A1 bekannt, auf deren Inhalt hiermit ausdrücklich Bezug genommen wird. Mittels einer derartigen Sensoreinheit lässt sich der innerhalb des Lagerrohrs herrschende Druck besonders einfach messen und an eine Auswerteeinheit kommunizieren.

In einer anderen Ausgestaltung des ersten Bereichs ist dieser am Ende einer Motorwelle ausgebildet. Auch hier ist der Rotor des Elektromotors bzw. das mit dem Rotor gekoppelte Laufrad des Ventilators mit einer Motorwelle verbunden, die durch ein Lagerrohr in den Elektromotor führt und mittels mindestens eines Lagers drehbar gelagert ist. Diese Motorwelle umfasst jedoch eine Durchführung, die Öffnungen an beiden stirnseitigen Enden der Motorwelle miteinander verbindet. Dies bedeutet, dass eine Öffnung an einem stirnseitigen Ende der Motorwelle über die Durchführung mit einer Öffnung an dem gegenüberliegenden stirnseitigen Ende der Motorwelle verbunden ist. Wenn das eine stirnseitige Ende der Motorwelle auf die Zuströmseite des Ventilators weist, kann bei dem gegenüberliegenden stirnseitigen Ende der Motorwelle ein erster Bereich ausgebildet sein. Auch bei dieser Ausgestaltung ist es unerheblich, auf welche Weise und mit welchem Durchmesser die Durchführung gebildet ist. Wesentlich ist, dass die Motorwelle ausreichende Stabilität aufweist und dass die Durchführung einen hinreichenden Druckausgleich zwischen den stirnseitigen Öffnungen zulässt. Diese Anforderung ist jedoch einfach zu realisieren. Auch hier ist zu verstehen, dass, wenn das eine stirnseitige Ende in Richtung Abströmseite des Ventilators weist, an dem gegenüberliegenden stirnseitigen Ende der Motorwelle ein zweiter Bereich gebildet sein kann.

In einer anderen Ausgestaltung des ersten Bereichs kann dieser bei einem Luftspalt ausgebildet sein. Vielfach ist ein Gehäuse des Elektromotors des Ventilators derart ausgebildet, dass Luftspalte zwischen Rotor und Stator des Elektromotors zur Entwärmung des Elektromotors vorhanden sind. An diesen Luftspalten kann ein Druck herrschen, der einem zuströmseitigen Druck entspricht oder in einer definierten Relation zu diesem steht. Daher kann ein derartiger Luftspalt auch dazu dienen, einen ersten Bereich zu bilden. Auch hier ist zu verstehen, dass an dem Luftspalt auch ein zweiter Bereich gebildet sein kann, wenn der dort herrschende Druck im Trend dem Druck auf Abströmseite entspricht.

In einer Ausgestaltung des zweiten Bereichs kann dieser in einem Elektronikgehäuse ausgebildet sein. Wenn das Elektronikgehäuse an dem Elektromotor abströmseitig ausgebildet ist, hat sich gezeigt, dass der dort herrschende statische Druck mit dem abströmseitigen Druck korrespondiert. Daher kann der zweite Bereich in dem Elektronikgehäuse ausgebildet sein. Auch hier ist ersichtlich, dass ein zuströmseitig ausgerichtetes Elektronikgehäuse zur Bildung eines ersten Bereichs in dem Elektronikgehäuse geeignet ist.

Für das Ermitteln eines Volumenstroms des Mediums ist ein Dichtewert, der die Dichte des beförderten Mediums angibt, erforderlich. In einer Ausgestaltung kann dieser Wert abgeschätzt oder durch eine übergeordnete Steuereinheit an die Auswerteeinheit übergeben werden. In einer anderen Ausgestaltung weist der Ventilator einen Temperatursensor und/oder einen Feuchtesensor auf, wobei der Temperatursensor eine Temperatur des durch den Ventilator bewegten Mediums und der Feuchtesensor ein Feuchtegehalt des durch den Ventilator bewegten Mediums misst. Die durch den Temperatursensor und/oder den Feuchtesensor gewonnenen Messwerte können dann der Auswerteinheit zur Ermittlung der Dichte des Mediums übergeben werden. Da die Dichte eines gasförmigen Mediums im Wesentlichen von der Feuchte und der Temperatur des Mediums abhängt, kann auf diese Weise die Dichte des Mediums relativ genau bestimmt werden. Entsprechend kann die Auswerteeinheit zusätzlich dazu ausgebildet sein, basierend auf den erhaltenen Messwerten eine Dichte des Mediums zu bestimmen.

In einer Weiterbildung weist der Ventilator einen Speicher auf, in dem eine oder mehrere Druckkennlinien abgelegt sind. Die Auswerteeinheit kann kommunizierend mit dem Speicher verbunden sein, sodass die Auswerteeinheit bei der Bestimmung eines Volumenstroms und/oder eines Massenstroms eines Mediums auf eine in dem Speicher abgelegte Druckkennlinie zugreifen kann. Der Speicher kann zusätzlich durch die Auswerteeinheit dazu genutzt werden, um ermittelte Werte der Volumenströme und/oder Masseströme des Mediums, erhaltene Ist-Drehzahlen, bestimmte/erhaltene Ist-Druckdifferenzen und/oder weitere während des Betriebs des Ventilators entstehende Werte abzulegen. Dabei ist der Speicher vorzugsweise durch einen nicht-flüchtigen Speicher ausgebildet, der auch nach Ausbleiben einer Spannungsversorgung gespeicherte Werte behält. Dieser Speicher kann auf verschiedenste Weise gebildet sein. Beispielhaft sei auf die Verwendung eines Flash-Speichers, eines EEPROMs (Electronically Erasable Programmable Read-Only Memory), eines NVRAMs (Non-volatile Random Access Memory) oder eines anderen Halbleiterspeichers verwiesen.

In einer Weiterbildung umfasst der Ventilator eine Kommunikationseinheit, mittels der durch die Auswerteeinheit bestimmte Werte für den Volumenstrom und/oder den Massenstrom zu einer Managementeinheit und/oder einer übergeordneten Regeleinheit kommunizierbar sind. Die Kommunikationseinheit kann auf verschiedenste Weise ausgebildet sein und es können verschiedenste Kommunikationsstandards und -technologien für eine Datenübertragung von und zu dieser Kommunikationseinheit eingesetzt werden. Digitale Übertragungstechniken können ebenso genutzt werden wie analoge. Die Übertragung kann drahtgebunden oder drahtlos erfolgen. Es lassen sich parallele oder serielle Übertragungsschnittstellen nutzen. Die Übertragung kann paketiert oder in Direktverbindungen erfolgen. Lediglich beispielhaft, jedoch nicht auf diese beschränkt, sei auf die Verwendung von Bluetooth, Bluetooth LE (Low Energy), NFC (Near Field Communication), Ethernet, RS485, Modbus, Profibus, CAN-Bus oder USB (Universal Serial Bus) verwiesen.

Wenn die Kommunikationseinheit zur Kommunikation mit einer Managementeinheit genutzt wird, kann die Managementeinheit verschiedentlich aufgebaut sein und genutzt werden. So ist denkbar, dass die Managementeinheit Informationswerte über das bewegte Medium speichert und diese beispielsweise im Rahmen eines Industrie 4.0 Umfelds zur Verfügung stellt. Die Managementeinheit kann alternativ oder zusätzlich auch dazu ausgebildet sein, Sollwertvorgaben und/oder Dichtewerte des bewegten Mediums an den Ventilator zu senden. Die Managementeinheit kann dann zusammen mit dem Ventilator ein System bilden.

Wenn die Kommunikationseinheit zur Kommunikation mit einer übergeordneten Regeleinheit genutzt wird, kann diese Regeleinheit ein System mit dem Ventilator bilden und den Ventilator beispielsweise auf eine vorgegebene Sollfördermenge (Massenstrom, Volumenstrom) regeln.

Der Elektromotor des Ventilators kann auf verschiedentliche Weise ausgebildet sein. Synchronmotoren lassen sich ebenso einsetzen wie Asynchronmotoren oder Gleichstrommotoren. Vorzugsweise ist der Elektromotor als elektronisch kommutierter Motor (EC-Motor) ausgebildet. Ganz besonders bevorzugter Weise ist der Elektromotor als Außenläufermotor ausgestaltet.

Kernstück des erfindungsgemäßen Ventilators ist ein Elektromotor, in dem alle wesentlichen Elemente zur Bestimmung des durch den Ventilator bewegten Medienstroms angeordnet sein können. Ein derartiger Elektromotor weist einen Stator und einen relativ zu dem Stator drehbar gelagerten Rotor auf, wobei der Rotor mit dem Laufrad des Ventilators gekoppelt ist. In dem erfindungsgemäßen Elektromotor können das Drucksensorsystem, das Drehzahlermittlungssystem und die Auswerteeinheit integriert sein. Für diese Integration bietet sich ein Elektronikraum an, der innerhalb eines Elektronikgehäuses des Elektromotors gebildet ist. Durch diese oder eine andere Integration wird das Drucksensorsystem, das Drehzahlermittlungssystem und die Auswerteeinheit integraler Bestandteil des Elektromotors, so dass die Einheiten jeweils fest mit dem Elektromotor gekoppelt sind.

Ein erfindungsgemäßes Verfahren, das insbesondere einen erfindungsgemäßen Ventilator nutzt und bei dem der Ventilator einen Elektromotor und ein durch den Elektromotor angetriebenes Laufrad umfasst, umfasst die Schritte des Ermittelns einer Ist-Druckdifferenz, des Ermittelns einer Ist-Drehzahl des Laufrads und des (quantitativen) Bestimmens eines Volumenstroms und/oder eines Massenstroms basierend auf der Ist-Druckdifferenz, der Ist-Drehzahl und einer Druckkennlinie des Ventilators. Dabei kann ein Prozessor, insbesondere ein Mikroprozessor vorgesehen sein, der die Berechnungen durchführt und die Schritte des Verfahrens steuert.

Eine durch den erfindungsgemäßen Ventilator und/oder das erfindungsgemäße Verfahren genutzte Druckkennlinie kann auf verschiedene Weisen gebildet sein. So ist es denkbar, dass die Druckkennlinie für einen baugleichen Ventilator als typbezogene Kennlinie ermittelt und bei der Produktion eines anderen Ventilators gleichen Typs diese typbezogene Kennlinie in einen Speicher des anderen Ventilators abgelegt wird. Da sich Ventilatoren gleichen Typs in weiten Teilen ähneln, kann auf diese Weise sehr einfach eine Druckkennlinie auf eine Vielzahl von Ventilatoren verteilt werden. Wenn es auf die Präzision der Druckkennlinie ankommt und Exemplarstreuungen der Ventilatoren weitgehend eliminiert werden sollen, bietet es sich an, für jeden einzelnen Ventilator dedizierte Kalibrierungsmessungen durchzuführen und diese in einem Speicher des Ventilators abzulegen. In beiden Fällen können auch mehrere Kalibrierungsmessungen durchgeführt werden und die Druckkennlinie kann als Mittelwert der verschiedenen Kalibrierungsmessungen berechnet werden. Es ist auch denkbar, dass die Drucckennlinie anwendungsbezogen und vorteilhaft gleichzeitig typbezogen bestimmt und hinterlegt wird, da sie in gewissem Maße von der Einbausituation des Ventilators abhängig sein kann. In diesem Fall ist für den Anwender im Ventilator vorteilhaft eine Prozedur implementiert, wie dieser eine Druckkennlinie hinterlegen kann.

Es gibt nun verschiedene Möglichkeiten, die Lehre der vorliegenden Erfindung in vorteilhafter Weise auszugestalten und weiterzubilden. Dazu ist einerseits auf die den nebengeordneten Ansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: einen Schnitt durch einen beispielhaften Ventilator gemäß Stand der Technik,
- Fig. 2: ein erstes Ausführungsbeispiel eines erfindungsgemäßen Ventilators mit einer Hohlwelle und einem durch ein Schott abgetrennten ersten und zweiten Bereich,
- Fig. 3: ein Diagramm mit einer Abhängigkeit verschiedener Differenzdrücke von einem durch den Ventilator geförderten Volumenstrom,
- Fig. 4: eine Vergrößerung im Bereich eines Schotts mit einer beispielhaften Anordnung eines Absolutdrucksensors, wobei die Vergrößerung eine Ausführungsform ähnlich der Fig. 2 zeigt,
- Fig. 5: eine Vergrößerung im Bereich eines Schotts, mit einer anderen beispielhaften Anordnung eines Absolutdrucksensors, wobei die Vergrößerung eine Ausführungsform ähnlich der Fig. 2 zeigt,
- Fig. 6: einen Schnitt durch ein zweites Ausführungsbeispiel eines erfindungsgemäßen Ventilators mit einer teilweise hohlen Welle, einem ersten Bereich in einem Lagerrohr und einem zweiten Bereich in einem Elektronikgehäuse,
- Fig. 7: eine Abwandlung des Ausführungsbeispiels gemäß Fig. 6, bei dem die Ist-Druckdifferenz mittels eines Differenzdrucksensors gemessen wird,
- Fig. 8: einen Schnitt durch einen Elektromotor eines nicht-erfindungsgemäßen Beispiels eines Ventilators mit einem Differenzsensor und einem in einem Elektronikgehäuse gebildeten ersten Bereich und einem außerhalb des Elektronikgehäuses gebildeten zweiten Bereich,
- Fig. 9: einen Schnitt durch einen Elektromotor eines weiteren nicht-erfindungsgemäßen Beispiels eines mit einem Differenzdrucksensor und einer durch einen Druckkanal gebildete Durchführung zu einem ersten Bereich und
- Fig. 10: eine Variante des Beispiels des Ventilators gemäß Fig. 9.

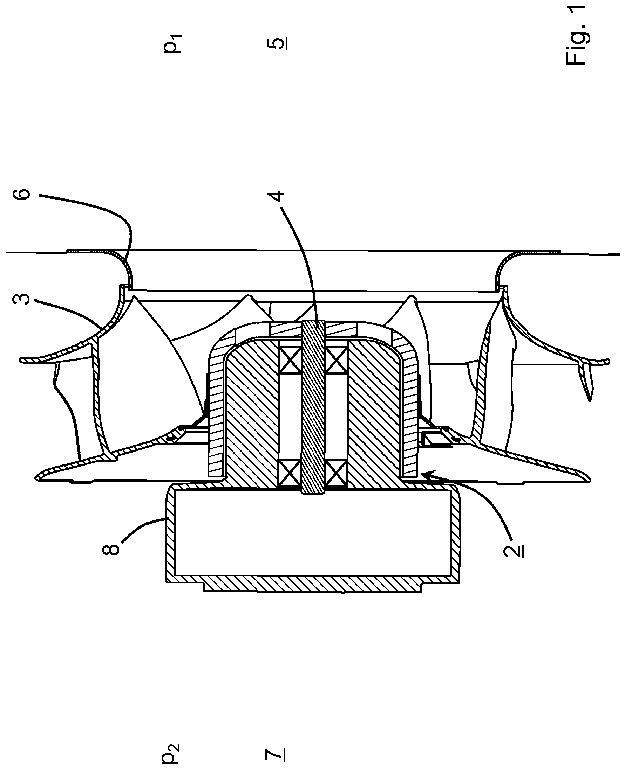

Fig. 1 zeigt einen Schnitt durch einen beispielhaften Ventilator, der aus dem Stand der Technik bekannt ist und von dem die nachfolgend beschriebenen Ausführungsbeispiele jeweils ausgehen. Bei der Beschreibung dieses bekannten Ventilators sind Elemente, die auch bei einem Ausführungsbeispiel des erfindungsgemäßen Ventilator vorkommen oder vorkommen können, mit denselben Bezugszeichen wie bei den Ausführungsbeispielen versehen.

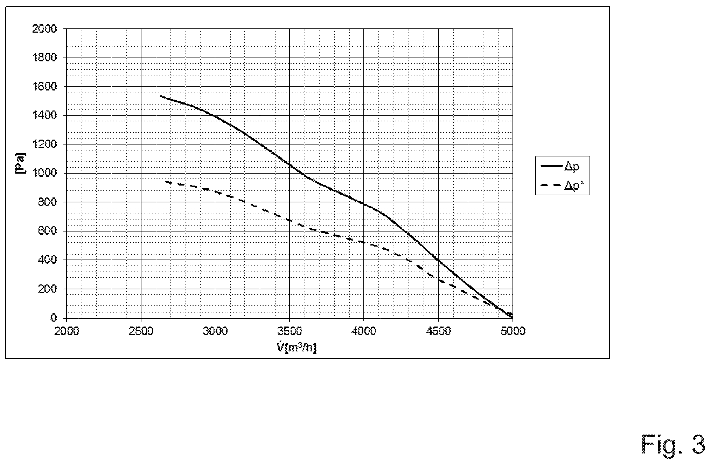

Der in Fig. 1 dargestellte Ventilator umfasst einen Elektromotor 2 und ein Laufrad 3, das relativ zu dem Elektromotor 2 um eine Motorwelle 4 drehbar gelagert ist und durch den Elektromotor 2 angetrieben wird. Das Laufrad 3 und damit der Ventilator bewegt einen Medienstrom - in dem vorliegenden Fall einen Luftstrom - von einer Zuströmseite 5 durch eine Einlaufdüse 6 und das Laufrad 3 zu einer Abströmseite 7. Abströmseitig ist an dem Elektromotor 2 ein Elektronikgehäuse 8 angeordnet, in dem eine Elektronik des Elektromotors angeordnet sein kann. Diese Elektronik kann beispielsweise ein System von Speisesignalen erzeugen, wobei das System von Speisesignalen ein Drehfeld in dem Elektromotor erzeugen kann, das eine Drehbewegung des Rotors hervorruft. Bei Betrieb des Ventilators stellt sich auf der Zuströmseite ein Druck p₁ und auf der Abströmseite ein Druck p₂ ein. Daraus kann eine Druckdifferenz Δp = p₂ - p₁ berechnet werden. Diese Druckdifferenz und ein durch das Laufrad bewegter Medienstrom weisen eine definierte Abhängigkeit auf, die beispielhaft in dem Diagramm nach Fig. 3 als durchgezogene Linie dargestellt ist. Dieser Ventilator bildet den Ausgangspunkt für die nachfolgend beschriebenen Ausführungsbeispiele eines erfindungsgemäßen Ventilators.

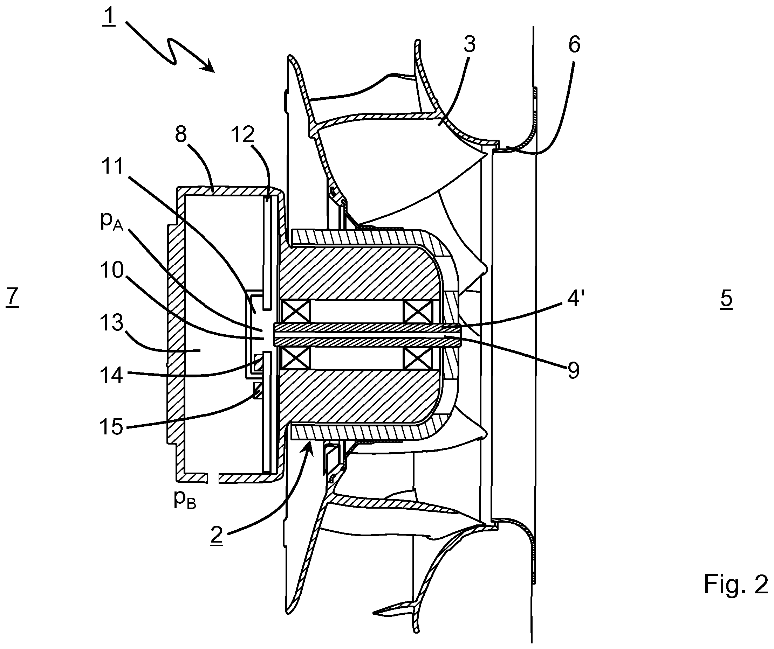

Ein erstes Ausführungsbeispiel eines erfindungsgemäßen Ventilators ist in Fig. 2 dargestellt. Der Ventilator 1 ist ähnlich zu dem in Fig. 1 dargestellten Ventilator aufgebaut. Die Motorwelle 4' des vorliegenden Ventilators 1 umfasst eine Durchführung 9, die eine Öffnung an einem stirnseitigen Ende der Motorwelle 4' mit einer Öffnung an dem gegenüberliegenden stirnseitigen Ende der Motorwelle 4' verbindet. Die Durchführung 9 ist als zentrale Bohrung ausgebildet ist, sodass die Motorwelle 4' eine Hohlwelle ist. Auf diese Weise stellt sich an dem der Zuströmseite 5 abgewandten stirnseitigen Ende der Motorwelle 4' ein Druck p_{A} ein, der mit dem Druck p₁ auf der Zuströmseite 5 korrespondiert. Der Bereich mit Druck p_{A} kann einen ersten Bereich 10 im Sinne der vorliegenden Erfindung bilden.

Damit es zu keinem Druckausgleich kommt, ist ein Schott 11 in dem Elektronikgehäuse 8 angeordnet, das auf einer Platine 12 der Motorelektronik oder direkt auf dem Boden des Elektronikgehäuses befestigt ist. Auf diese Weise wird zum einen verhindert, dass Schmutz und Feuchtigkeit von der Zuströmseite in das Elektronikgehäuse gelangt. Zum anderen entsteht durch dieses Schott 11 eine Unterteilung, die den ersten Bereich 10 von einem zweiten Bereich 13 trennt. Dabei verhindern das Schott 11 und die Platine 12 zusammen einen Druckausgleich zwischen den Bereichen 10 und 13 mit den Drücken p_{A} bzw. p_{B}.

In dem zweiten Bereich 13 stellt sich ein (statischer) Druck p_{B} ein, der mit dem abströmseitigen Druck p₂ korrespondiert. Durch einen ersten und einen zweiten Absolutdrucksensor 14, 15 werden diese Drücke p_{A} und p_{B} gemessen, wobei die beiden Absolutdrucksensoren in Fig. 2 jeweils auf der Platine 12 der Motorelektronik angeordnet sind. Eine Ist-Druckdifferenz Δp* ergibt sich nach Δp* = p_{B} - P_{A}. Diese Ist-Druckdifferenz Δp* weist ebenso wie die Druckdifferenz Δp eine Abhängigkeit von dem durch den Ventilator bewegten Volumenstrom auf. Dieser Zusammenhang ist in Fig. 3 als gestrichelte Linie eingezeichnet. Es ist zu erkennen, dass beide dargestellten Druckkennlinien (durchgezogene und gestrichelte Linie) annähernd proportional zueinander sind. Zudem sind beide Druckkennlinien, zumindest im relevanten dargestellten Bereich, eine streng monoton fallende Funktion des Volumenstroms. Damit lässt sich die Druckkennlinie Δp* (zumindest in diesem Kennlinienbereich) zur Bestimmung eines Volumenstroms und/oder eines Massenstroms eines durch den Ventilator bewegten Mediums nutzen. Dies zeigt, dass mit dem erfindungsgemäßen Ventilator eine Druckdifferenzmessung lokal im Bereich des Motors gemessen werden kann, um ein System zur Bestimmung des Volumenstromes bzw. des Massenstromes im Betrieb kompakt und lokal im Bereich des Motors zu bilden, ohne dass elektrische Leitungen oder Schläuche weg vom Motor geführt werden müssen. Bei Nutzung der Druckdifferenz Δp* muss lediglich eine Kalibrierkennlinie bezüglich der entsprechenden lokalen Druckdifferenz Δp* auf dem Ventilator hinterlegt sein. Dabei sind Dichte- und Drehzahlabhängigkeiten wie an anderer Stelle bereits beschrieben zu behandeln.

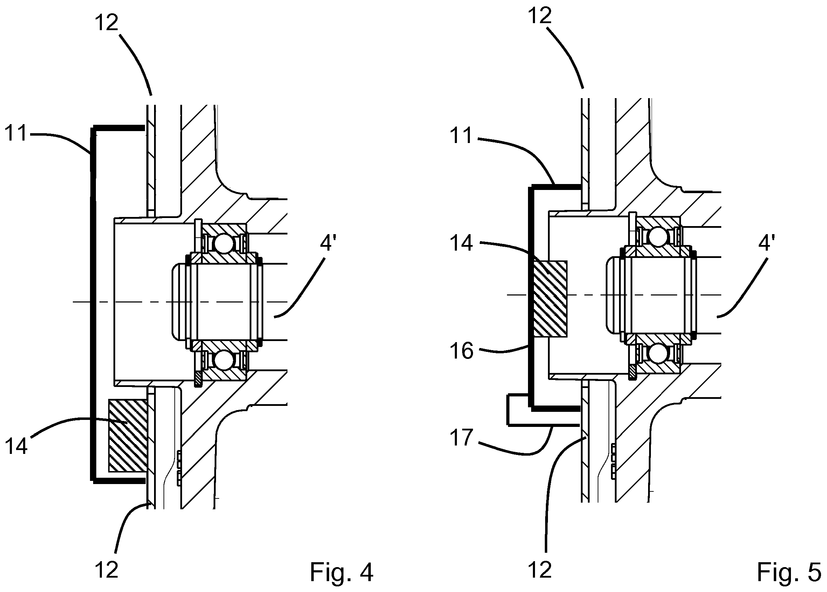

In den Figuren 4 und 5 sind zwei mögliche Anordnungen eines ersten Absolutdrucksensors 14 in einer Vergrößerung dargestellt, wobei die Vergrößerung eine Ausführungsform ähnlich der Fig. 2 zeigt. In Fig. 4 ist der erste Absolutdrucksensor 14 - wie bei Fig. 2 - auf der Platine 12 der Motorelektronik angeordnet. Das Schott 11 ist durch ein hohlzylinderförmiges Bauteil, beispielweise aus einem Kunststoff, gebildet. In Fig. 5 ist der erste Absolutdrucksensor direkt gegenüber dem elektronikseitigen stirnseitigen Ende der Motorwelle 4' angeordnet. Hierzu kann die Deckfläche des Schotts 11 durch eine Platine 16 gebildet sein, die mittels eines Kabels 17 (beispielsweise ein Flachbandkabel) mit der Platine 12 und damit der Motorelektronik verbunden sein kann.

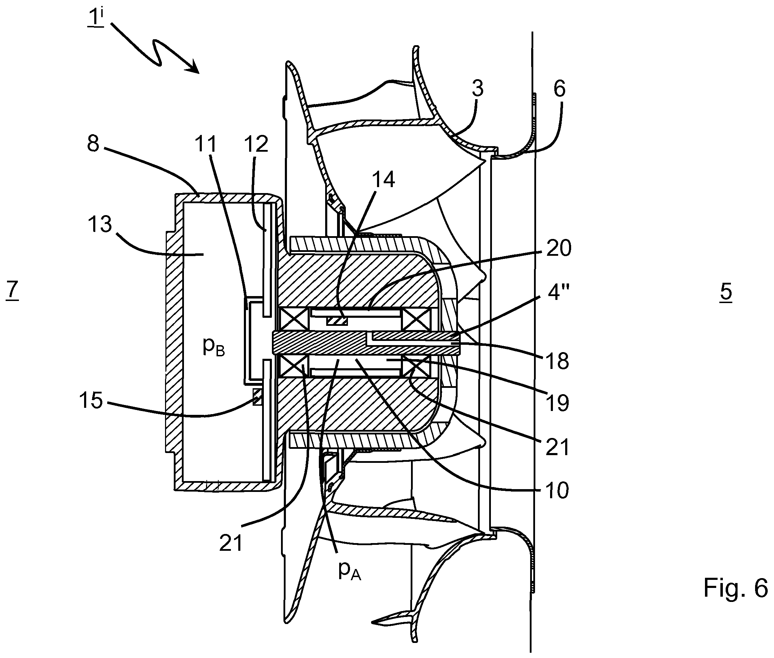

In Fig. 6 ist ein zweites Ausführungsbeispiel eines erfindungsgemäßen Ventilators 1ⁱ dargestellt. In diesem Ausführungsbeispiel ist die Motorwelle 4" lediglich in Teilen als Hohlwelle ausgebildet. Eine Durchführung 18 verbindet eine Öffnung an einem stirnseitigen Ende der Motorwelle 4" mit einer Öffnung an einer Längsseite der Motorwelle 4". Die Durchführung 18 ist durch eine zentrale, etwa bis zur längsseitigen Mitte der Motorwelle 4" reichende Bohrung und durch eine Querbohrung gebildet. Das stirnseitige Ende der Motorwelle 4" mit der Öffnung zu der Durchführung 18 ist auf die Zuströmseite 5 ausgerichtet. Dadurch kann ein Druckausgleich zwischen der Zuströmseite 5 und einem Lagerrohr 19 entstehen. Auf diese Weise ist in dem Lagerrohr 19 ein erster Bereich 10 im Sinne der vorliegenden Erfindung gebildet und es stellt sich dort ein Druck p_{A} ein. Dieser Druck p_{A} kann beispielsweise durch eine Sensoranordnung 20 gemessen werden, die in das Lagerrohr 19 eingeführt und im Detail in der DE 10 2018 211 833 A1 beschrieben ist. Diese Sensoranordnung 20 kann einen ersten Absolutdrucksensor 14 umfassen, der den Druck p_{A} misst. Da die Lager 21 an den beiden Enden des Lagerrohrs 19 das Lagerrohr 19 einen Druckausgleich nicht verhindern und durchlässig sind, ist auch in diesem Ausführungsbeispiel ein Schott 11 angeordnet, das den ersten Bereich 10 und einen in dem Elektronikgehäuse 8 gebildeten zweiten Bereich 13 trennt. Es ist bei anderen Ausführungsformen auch denkbar, dass kein Schott ausgebildet ist und Lager verwendet werden, die einen Druckausgleich verhindern. Ein zweiter Absolutdrucksensor 15 kann den in dem zweiten Bereich 13 herrschenden Druck p_{B} messen.

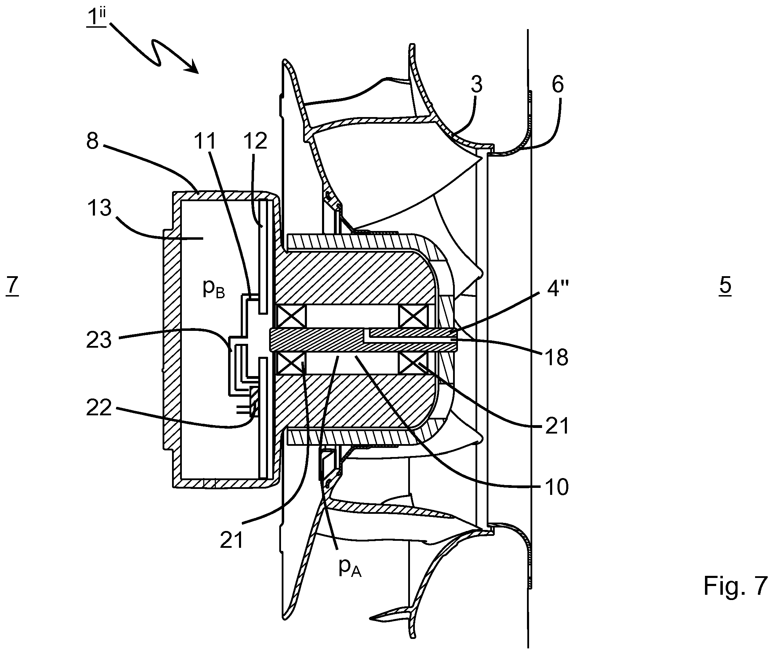

Eine sehr ähnliche Ausgestaltung eines erfindungsgemäßen Ventilators ist in Fig. 7 dargestellt. Im Gegensatz zu Fig. 6 ist bei dem Ventilator 1ⁱⁱ keine Sensoranordnung 20 im Lagerrohr 19 vorhanden. Stattdessen kommt ein Differenzdrucksensor 22 zum Einsatz. Ein erster Anschluss, der Zugang zu einer nicht dargestellten ersten Sensorfläche bietet, ist über einen Schlauch 23 und durch das Schott 11 mit dem ersten Bereich 10 verbunden, sodass an dieser ersten Sensorfläche der Druck p_{A} des ersten Bereichs 10 anliegt, insbesondere wenn durch das elektronikseitige Lager 21 ein Druckausgleich möglich ist. Ein zweiter Anschluss, der Zugang zu einer ebenso nicht dargestellten zweiten Sensorfläche bietet, ist zum Innenraum des Elektronikgehäuses 8 hin geöffnet, sodass an dieser zweiten Sensorfläche der Druck p_{B} innerhalb des Elektronikgehäuses 8 und damit innerhalb des zweiten Bereichs 13 anliegt. Auf diese Weise kann der Differenzdrucksensor 22 die Ist-Differenzdruckdifferenz Δp* messen.

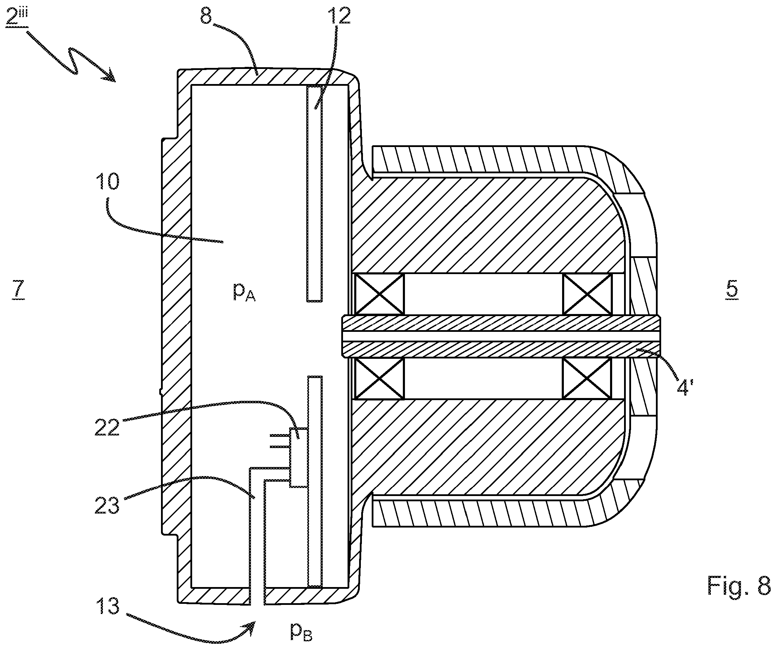

Fig. 8 zeigt den Elektromotor 2ⁱⁱⁱ eines Beispiels eines nichterfindungsgemäßen Ventilators. Ähnlich wie bei dem ersten Ausführungsbeispiel gemäß Fig. 2 ist die Motorwelle 4' dieses Elektromotors 2ⁱⁱⁱ als Hohlwelle ausgebildet. Allerdings ist in diesem Ausführungsbeispiel kein Schott vorhanden, sodass sich in dem Elektronikgehäuse 8 ein Druck p_{A} einstellt, der mit dem Druck auf der Zuströmseite 5 korrespondiert. Daher ist in diesem Ausführungsbeispiel ein erster Bereich 10 im Sinne der vorliegenden Erfindung in dem Elektronikgehäuse 8 gebildet. Der zweite Bereich 13 ist in diesem Ausführungsbeispiel außerhalb des Elektromotors 2ⁱⁱⁱ, nämlich nahe der äußeren Oberfläche des Elektronikgehäuses 8 gebildet. Ein Differenzdrucksensor 22, der auf einer Platine 12 der Motorelektronik angeordnet ist, misst die Ist-Druckdifferenz Δp*. Ein erster Anschluss des Differenzdrucksensors 22 ist hier zum Inneren des Elektronikgehäuses 8 hin offengelassen, sodass an einer ersten Sensorfläche der Druck p_{A} des ersten Bereichs 10 anliegt. Der zweite Anschluss des Differenzdrucksensors 22 ist mit einem Schlauch oder Kanal 23 durch eine Wandung des Elektronikgehäuses 8 mit dem zweiten Bereich 13 verbunden. Auf diese Weise misst der Differenzdrucksensor 22 auch in diesem Ausführungsbeispiel einen Differenzdruck Δp*, der zur Bestimmung eines Volumenstroms und/oder eines Massenstroms eines durch den Ventilator bewegten Mediums geeignet ist.

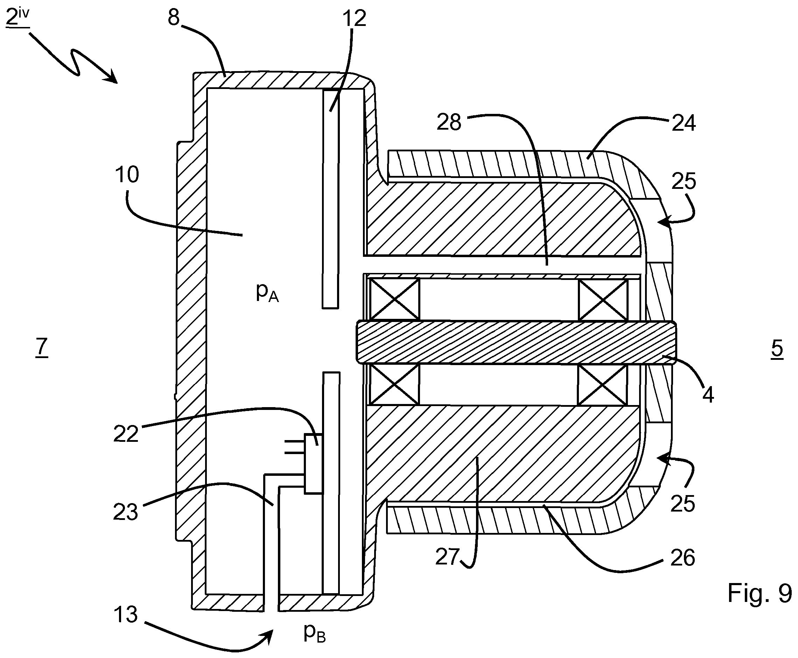

Fig. 9 zeigt einen Elektromotor 2^{iv} eines weiteren Beispiels eines nichterfindungsgemäßen Ventilators. Ein Differenzdrucksensor 22 erfasst eine Ist-Druckdifferenz Δp*, wobei eine erste Sensorfläche des Differenzdrucksensors 22 einen Druck p_{A} und eine zweite Sensorfläche einen Druck p_{B} erfasst. Der erste Bereich 10 ist in dem Innenraum des Elektronikgehäuses 8 gebildet. Eine Verbindung zu der Zuströmseite 5 entsteht über einen Druckkanal28, bspw. in Form einer Nut. In einer möglichen Ausführung führt der Druckkanal 28 von dem Innenraum des Elektronikgehäuses 8 durch den Stator 27 in einen Bereich nahe eines Luftdurchlasses 25. Durch den Luftdurchlass 25, beispielsweise ausgeführt als Kondenswasserloch oder Kühlöffnung, wird der Druck p_{A} bzw. ein damit korrelierbarer Wert der ersten Sensorfläche des Sensors 22 zugänglich gemacht. Dabei ist es von untergeordneter Bedeutung, ob der Druckkanal 28 direkt in unmittelbare Nähe des Luftdurchlasses 25 angebracht wird, oder ein beliebiger Bereich eines Luftspaltes 26 angebunden wird. Von Bedeutung ist lediglich, dass der abgegriffene Druck p_{A} mit dem Druck p₁ der Zuströmseite 5 korreliert. Der Vollständigkeit halber sei darauf hingewiesen, dass bei Ausführungsformen, bei denen die Rotorglocke 24 des Motors 2 einer Abströmseite 7 anstatt der Zuströmseite 5 zugewandt ist, die Bereiche für Drücke p₁ und p₂ bzw. p_{A} und p_{B} bezüglich des Motors 2 miteinander vertauscht auftreten.

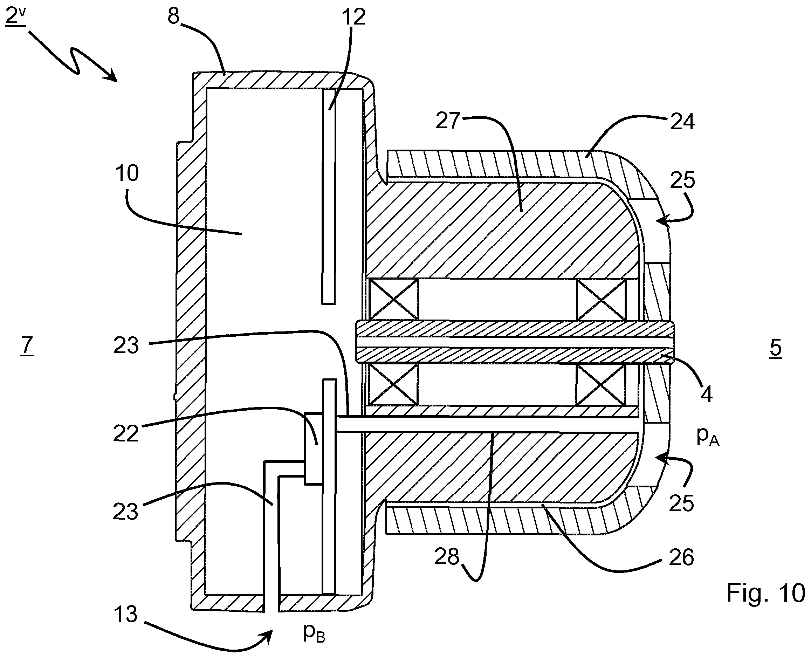

Fig. 10 zeigt eine Variante eines Elektromotor 2^{v} des Beispiels gemäß Fig. 9. Auch hier wird ein Druckkanal 28 durch den Rotor 27 des Elektromotors 2^{v} genutzt. Allerdings ist die erste Sensorfläche des Differenzdrucksensors 22 direkt über einen Schlauch 23 mit dem Druckkanal 28 verbunden.

Hinsichtlich weiterer vorteilhafter Ausgestaltungen des erfindungsgemäßen Ventilators und des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken. Der Schutzumfang der Erfindung ist durch die nachfolgenden Ansprüche festgelegt.

### Bezugszeichenliste

- 1: Ventilator
- 2: Elektromotor
- 3: Laufrad
- 4: Motorwelle
- 5: Zuströmseite
- 6: Einlaufdüse
- 7: Abströmseite
- 8: Elektronikgehäuse
- 9: Durchführung
- 10: Erster Bereich
- 11: Schott
- 12: Platine der Motorelektronik
- 13: Zweiter Bereich
- 14: Erster Absolutdrucksensor
- 15: Zweiter Absolutdrucksensor
- 16: Platine für Sensor
- 17: Kabel
- 18: Durchführung
- 19: Lagerrohr
- 20: Sensoranordnung
- 21: Lager
- 22: Differenzdrucksensor
- 23: Schlauch
- 24: Rotorglocke
- 25: Luftdurchlass
- 26: Luftspalt
- 27: Stator, Wicklung
- 28: Druckkanal

## Patentansprüche

1. Ventilator mit Mitteln zum Bestimmen eines durch den Ventilator (1) bewegten Medienstroms, der Ventilator umfassend einen Elektromotor (2) und ein durch den Elektromotor (2) angetriebenes Laufrad (3), wobei das Laufrad (3) ein gasförmiges Medium in einem Medienstrom von einer Zuströmseite (5) zu einer Abströmseite (7) bewegt, umfassend ein Drucksensorsystem, ein Drehzahlermittlungssystem und eine Auswerteeinheit,
wobei das Drucksensorsystem dazu ausgebildet ist, eine Ist-Druckdifferenz (Δ p*) zwischen einem ersten Bereich (10) und einem zweiten Bereich (13) zu ermitteln, wobei der erste Bereich (10) und/oder der zweite Bereich (13) in dem Elektromotor (2) ausgebildet sind/ist, wobei in dem ersten Bereich (10) ein Druck (p_{A}) herrscht, der mit einem zuströmseitig vorhandenen Druck (p₁) korrespondiert, wobei in dem zweiten Bereich (13) ein Druck (p_{B}) herrscht, der mit einem abströmseitig vorhandenen Druck (p₂) korrespondiert,
wobei das Drehzahlermittlungssystem dazu ausgebildet ist, eine Ist-Drehzahl (n) des Laufrads (3) zu ermitteln, und
wobei die Auswerteeinheit dazu ausgebildet ist, basierend auf der Ist-Druckdifferenz (Δ p*), der Ist-Drehzahl (n) und einer Druckkennlinie des Ventilators (1) einen Massenstrom und/oder einen Volumenstrom des Mediums zu bestimmen,
**gekennzeichnet durch**
ein Schott (11), das innerhalb des Elektromotors (3) ausgebildet ist, wobei das Schott (11) einen Druckausgleich zwischen dem ersten Bereich (10) und dem zweiten Bereich (13) unterbindet oder zumindest erheblich reduziert.

2. Ventilator nach Anspruch 1, **dadurch gekennzeichnet, dass** das Drucksensorsystem einen ersten und einen zweiten Absolutdrucksensor (14, 15) umfasst, wobei der erste Absolutdrucksensor (14) einen Druck (p_{A}) in dem ersten Bereich (10) und der zweite Absolutdrucksensor (15) einen Druck (p_{B}) in dem zweiten Bereich (13) misst, wobei
der erste Absolutdrucksensor (14) in dem ersten Bereich (10) oder in einem über einen Schlauch oder Kanal (23) mit dem ersten Bereich (10) verbundenen ersten Messraum angeordnet sein kann.

3. Ventilator nach Anspruch 2, **dadurch gekennzeichnet, dass** der zweite Absolutdrucksensor (15) in dem zweiten Bereich (13) oder in einem über einen Schlauch oder Kanal (23) mit dem zweiten Bereich (13) verbundenen zweiten Messraum angeordnet ist.

4. Ventilator nach Anspruch 1, **dadurch gekennzeichnet, dass** das Drucksensorsystem einen Differenzdrucksensor (22) umfasst, wobei eine erste Sensorfläche des Differenzdrucksensors (22) mit einem Druck (p_{A}) in dem ersten Bereich (10) und eine zweite Sensorfläche des Differenzdrucksensors (22) mit einem Druck (p_{B}) in dem zweiten Bereich (13) beaufschlagt ist.

5. Ventilator nach einem der Ansprüche 1 bis 4, **dadurch gekennzeichnet, dass** das Laufrad (3) mit einer Motorwelle (4") verbunden ist, wobei die Motorwelle (4") durch ein Lagerrohr (19) in dem Elektromotor (2) geführt und mittels mindestens eines Lagers (21) drehbar gelagert ist, dass die Motorwelle (4") eine Durchführung (18) umfasst, die eine Öffnung an einem stirnseitigen Ende der Motorwelle (4") mit einer Öffnung an einer Längsseite der Motorwelle (4") verbindet, und dass der erste Bereich (10) oder der zweite Bereich (13) in dem Lagerrohr (19) gebildet ist oder
dass das Laufrad (3) mit einer Motorwelle (4') verbunden ist, wobei die Motorwelle (4') durch ein Lagerrohr (19) in dem Elektromotor (2) geführt und mittels mindestens eines Lagers (21) drehbar gelagert ist, dass die Motorwelle (4') eine Durchführung (9) umfasst, die Öffnungen an den beiden stirnseitigen Enden der Motorwelle (4') miteinander verbindet, und dass der erste Bereich (10) oder der zweite Bereich (13) an einem der beiden stirnseitigen Enden der Motorwelle (4') ausgebildet ist.

6. Ventilator nach einem der Ansprüche 1 bis 4, **dadurch gekennzeichnet, dass** der erste Bereich (10) bei einem Luftspalt ausgebildet ist, wobei der Luftspalt zwischen Rotor und Stator des Elektromotors (2) ausgebildet ist und eine Verbindung zwischen einer Umgebung des Elektromotors und dem ersten Bereich (10) oder dem zweiten Bereich (13) herstellt.

7. Ventilator nach einem der Ansprüche 1 bis 6, **dadurch gekennzeichnet, dass** abströmseitig an dem Elektromotor (2) ein Elektronikgehäuse (8) ausgebildet ist und dass der zweite Bereich (13) oder der erste Bereich (10) in dem Elektronikgehäuse (8) ausgebildet ist.

8. Ventilator nach einem der Ansprüche 1 bis 7, **gekennzeichnet durch** einen Temperatursensor und/oder einen Feuchtesensor, wobei der Temperatursensor eine Temperatur des durch den Ventilator (1) bewegten Mediums und der Feuchtesensor eine Feuchte des durch den Ventilator (1) bewegten Mediums misst und wobei durch den Temperatursensor und/oder den Feuchtesensor gewonnenen Messwerte der Auswerteeinheit zur Ermittlung einer Dichte des Mediums übergeben werden.

9. Ventilators nach einem der Ansprüche 1 bis 8, **gekennzeichnet durch** einen Speicher, wobei in den Speicher die Druckkennlinie abgelegt ist.

10. Ventilator nach einem der Ansprüche 1 bis 9, **gekennzeichnet durch** eine Kommunikationseinheit, mittels der durch die Auswerteeinheit bestimmte Werte für den Massenstrom und/oder den Volumenstrom zu einer Managementeinheit und/oder einer übergeordneten Regeleinheit kommunizierbar sind.

11. Ventilator nach einem der Ansprüche 1 bis 10, **dadurch gekennzeichnet, dass** der Elektromotor als elektronisch kommutierter Motor ausgebildet ist

12. Verfahren zum Bestimmen eines durch einen Ventilator bewegten Medienstroms, insbesondere einen Ventilator nach einem der Ansprüche 1 bis 11, wobei der Ventilator (1) einen Elektromotor (2) und ein durch den Elektromotor (2) angetriebenes Laufrad (3) umfasst, wobei das Verfahren die Schritte umfasst:
Ermitteln einer Ist-Druckdifferenz (Δ p*) zwischen einem ersten Bereich (10) und einem zweiten Bereich (13), wobei der erste Bereich (10) und/oder der zweite Bereich (13) in dem Elektromotor (2) ausgebildet sind/ist, wobei in dem ersten Bereich (10) ein Druck (p_{A}) herrscht, der mit einem zuströmseitig vorhandenen Druck (p₁) korrespondiert, wobei in dem zweiten Bereich (13) ein Druck (p_{B}) herrscht, der mit einem abströmseitig vorhandenen Druck (p₂) korrespondiert,
Ermitteln einer Ist-Drehzahl (n) des Laufrads (3) und
Bestimmen eines Volumenstroms und/oder eines Massenstroms des Medienstroms basierend auf der Ist-Druckdifferenz (Δ p*), der Ist-Drehzahl (n) und einer Druckkennlinie des Ventilators (1),
**dadurch gekennzeichnet, dass**
ein Schott (11), das innerhalb des Elektromotors (3) ausgebildet ist, einen Druckausgleich zwischen dem ersten Bereich (10) und dem zweiten Bereich (13) unterbindet oder zumindest erheblich reduziert.

13. Verfahren nach Anspruch 12, **dadurch gekennzeichnet, dass** die Druckkennlinie während einer Kalibrierungsmessung des Ventilators (1) oder eines Ventilators gleichen Typs ermittelt wird.

## Claims

1. A fan for determining a media flow moved by the fan (1), comprising an electric motor (2) and an impeller (3) driven by the electric motor (2), wherein the impeller (3) moves a gaseous medium in a media flow from an inflow side (5) to an outflow side (7),
including a pressure sensor system, a speed ascertainment system, and an evaluation unit,
wherein the pressure sensor system is designed to ascertain an actual pressure difference (Δp*) between a first region (10) and a second region (13), wherein the first region (10) and/or the second region (13) is/are formed in the electric motor (2), wherein a pressure (p_{A}) prevails in the first region (10) which corresponds to a pressure (p₁) present on the inflow side, wherein a pressure (ps) prevails in the second region (13) which corresponds to a pressure (p₂) present on the outflow side, wherein the speed ascertainment system is designed to ascertain an actual speed (n) of the impeller (3), and
wherein the evaluation unit is designed to determine a mass flow and/or a volume flow of the medium based on the actual pressure difference (Δp*), the actual speed (n), and a pressure characteristic curve of the fan (1),
**characterized by** a bulkhead (11), which is formed inside the electric motor (3), wherein the bulkhead (11) prevents or at least significantly reduces a pressure equalization between the first region (10) and the second region (13).

2. The fan as claimed in claim 1, **characterized in that** the pressure sensor system comprises a first and a second absolute pressure sensor (14, 15), wherein the first absolute pressure sensor (14) measures a pressure (p_{A}) in the first region (10) and the second absolute pressure sensor (15) measures a pressure (p_{B}) in the second region (13), whereas
the first absolute pressure sensor (14) can be arranged in the first region (10) or in a first measurement chamber connected via a hose or duct (23) to the first region (10).

3. The fan as claimed in claim 2, **characterized in that** the second absolute pressure sensor (15) is arranged in the second region (13) or in a second measurement chamber connected via a hose or duct (23) to the second region (13).

4. The fan as claimed in claim 1, **characterized in that** the pressure sensor system comprises a differential pressure sensor (22), wherein a first sensor surface of the differential pressure sensor (22) is subjected to a pressure (p_{A}) in the first region (10) and a second sensor surface of the differential pressure sensor (22) is subjected to a pressure (p_{B}) in the second region (13).

5. The fan as claimed in any one of claims 1 to 4, **characterized in that** the impeller (3) is connected to a motor shaft (4"), wherein the motor shaft (4") is led through a bearing tube (19) in the electric motor (2) and is rotatably mounted by means of at least one bearing (21), **in that** the motor shaft (4") comprises a feedthrough (18) which connects an opening on a front end of the motor shaft (4") to an opening on a long side of the motor shaft (4"), and **in that** the first region (10) or the second region (13) is formed in the bearing tube (19) or
that the impeller (3) is connected to a motor shaft (4'), wherein the motor shaft (4') is led through a bearing tube (19) in the electric motor (2) and is rotatably mounted by means of at least one bearing (21), **in that** the motor shaft (4') comprises a feedthrough (9), which connects openings at the two front ends of the motor shaft (4') to one another, and **in that** the first region (10) or the second region (13) is formed on one of the two front ends of the motor shaft (4').

6. The fan as claimed in any one of claims 1 to 4, **characterized in that** the first region (10) is formed at an air gap, wherein the air gap is formed between rotor and stator of the electric motor (2) and establishes a connection between surroundings of the electric motor and the first region (10) or the second region (13).

7. The fan as claimed in any one of claims 1 to 6, **characterized in that** an electronics housing (8) is formed on the outflow side on the electric motor (2), and **in that** the second region (13) or the first region (10) is formed in the electronics housing (8).

8. The fan as claimed in any one of claims 1 to 7, **characterized by** a temperature sensor and/or a humidity sensor, wherein the temperature sensor measures a temperature of the medium moved by the fan (1) and the humidity sensor measures a humidity of the medium moved by the fan (1) and wherein measured values obtained by the temperature sensor and/or the moisture sensor are transferred to the evaluation unit to ascertain a density of the medium.

9. The fan as claimed in any one of claims 1 to 8, **characterized by** a memory, wherein the pressure characteristic curve is stored in the memory.

10. The fan as claimed in any one of claims 1 to 9, **characterized by** a communication unit, by means of which values for the mass flow and/or the volume flow determined by the evaluation unit can be communicated to a management unit and/or a higher-order regulating unit.

11. The fan as claimed in any one of claims 1 to 10, **characterized in that** the electric motor is designed as an electronically commutated motor.

12. A method for determining a media flow moved by a fan, in particular a fan as claimed in any one of claims 1 to 11, wherein the fan (1) comprises an electric motor (2) and an impeller (3) driven by the electric motor (2), wherein the method comprises the following steps:
ascertaining an actual pressure difference (Δp*) between a first region (10) and a second region (13), wherein the first region (10) and/or the second region (13) is/are formed in the electric motor (2), wherein a pressure (p_{A}) prevails in the first region (10), which pressure corresponds to a pressure (p₁) present on the inflow side, wherein a pressure (p_{B}) prevails in the second region (13), which pressure corresponds to a pressure (p₂) present on the outflow side,
ascertaining an actual speed (n) of the impeller (3), and
determining a volume flow and/or a mass flow of the media flow based on the actual pressure difference (Δp*), the actual speed (n), and a pressure characteristic curve of the fan (1),
**characterized by** a bulkhead (11), which is formed inside the electric motor (3), wherein the bulkhead (11) prevents or at least significantly reduces a pressure equalization between the first region (10) and the second region (13).

13. The method as claimed in claim 12, **characterized in that** the pressure characteristic curve is ascertained during a calibration measurement of the fan (1) or a fan of the same type.

## Revendications

1. Ventilateur avec des moyens pour déterminer un flux de milieu déplacé par le ventilateur (1), le ventilateur comprenant un moteur électrique (2) et une roue mobile (3) entraînée par le moteur électrique (2), dans lequel la roue mobile (3) déplace un milieu gazeux dans un flux de milieu d'un côté admission (5) vers un côté échappement (7), comprenant un système de capteur de pression, un système de détermination de vitesse de rotation et une unité d'évaluation,
dans lequel le système de capteur de pression est conçu pour déterminer une différence de pression réelle (Δ p*) entre une première zone (10) et une seconde zone (13), dans lequel la première zone (10) et/ou la seconde zone (13) sont formées dans le moteur électrique (2), dans lequel une pression (p_{A}) règne dans la première zone (10), qui correspond à une pression (p₁) présente côté admission, dans lequel une pression (p_{B}) règne dans la seconde zone (13), qui correspond à une pression (p₂) présente côté échappement,
dans lequel le système de détermination de vitesse de rotation est conçu pour déterminer une vitesse de rotation réelle (n) de la roue mobile (3), et
dans lequel l'unité d'évaluation est conçue pour déterminer un débit massique et/ou un débit volumique du milieu sur la base de la différence de pression réelle (Δ p*), de la vitesse de rotation réelle (n) et d'une courbe caractéristique de pression du ventilateur (1),
**caractérisé par**
une cloison étanche (11) formée à l'intérieur du moteur électrique (3), la cloison étanche (11) empêchant ou au moins réduisant significativement la compensation de pression entre la première zone (10) et la seconde zone (13).

2. Ventilateur selon la revendication 1, **caractérisé en ce que** le système de capteur de pression comprend un premier et un second capteurs de pression absolue (14, 15), dans lequel le premier capteur (14) de pression absolue mesure une pression (pₐ) dans la première zone (10) et le second capteur (15) de pression absolue mesure une pression (p_{B}) dans la seconde zone (13), dans lequel
le premier capteur (14) de pression absolue peut être disposé dans la première zone (10) ou dans un premier espace de mesure relié à la première zone (10) par un tuyau ou un canal (23).

3. Ventilateur selon la revendication 2, **caractérisé en ce que** le second capteur (15) de pression absolue est disposé dans la seconde zone (13) ou dans un second espace de mesure relié à la seconde zone (13) par un tuyau ou un canal (23).

4. Ventilateur selon la revendication 1, **caractérisé en ce que** le système de capteur de pression comprend un capteur (22) de pression différentielle, dans lequel une première surface de capteur du capteur (22) de pression différentielle est soumise à une pression (p_{A}) dans la première zone (10) et une seconde surface de capteur du capteur (22) de pression différentielle est soumise à une pression (p_{B}) dans la seconde zone (13).

5. Ventilateur selon l'une des revendications 1 à 4, **caractérisé en ce que** la roue mobile (3) est reliée à un arbre moteur (4"), dans lequel l'arbre moteur (4") est guidé dans le moteur électrique (2) par un tube de palier (19) et monté de manière rotative au moyen d'au moins un palier (21), **en ce que** l'arbre moteur (4") comprend un passage (18) qui relie une ouverture sur une extrémité frontale de l'arbre moteur (4") à une ouverture sur un côté longitudinal de l'arbre moteur (4"), et **en ce que** la première zone (10) ou la seconde zone (13) est formée dans le tube de palier (19) ou
**en ce que** la roue mobile (3) est reliée à un arbre moteur (4'), dans lequel l'arbre moteur (4') est guidé dans le moteur électrique (2) par un tube de palier (19) et monté de manière rotative au moyen d'au moins un palier (21), **en ce que** l'arbre moteur (4') comprend un passage (9) qui relie entre elles des ouvertures sur les deux extrémités frontales de l'arbre moteur (4'), et **en ce que** la première zone (10) ou la seconde zone (13) est formée sur l'une des deux extrémités frontales de l'arbre moteur (4').

6. Ventilateur selon l'une des revendications 1 à 4, **caractérisé en ce que** la première zone (10) est formée au niveau d'un entrefer, dans lequel l'entrefer est formé entre le rotor et le stator du moteur électrique (2) et établit une liaison entre un environnement du moteur électrique et la première zone (10) ou la seconde zone (13).

7. Ventilateur selon l'une des revendications 1 à 6, **caractérisé en ce qu'**un boîtier électronique (8) est formé côté échappement sur le moteur électrique (2) et **en ce que** la seconde zone (13) ou la première zone (10) est formée dans le boîtier électronique (8).

8. Ventilateur selon l'une des revendications 1 à 7, **caractérisé par** un capteur de température et/ou un capteur d'humidité, dans lequel le capteur de température mesure une température du milieu déplacé par le ventilateur (1) et le capteur d'humidité mesure une humidité du milieu déplacé par le ventilateur (1), et dans lequel les valeurs de mesure obtenues par le capteur de température et/ou le capteur d'humidité sont transmises à l'unité d'évaluation pour déterminer la densité du milieu.

9. Ventilateur selon l'une des revendications 1 à 8, **caractérisé par** une mémoire, dans lequel la courbe caractéristique de pression est enregistrée dans la mémoire.

10. Ventilateur selon l'une des revendications 1 à 9, **caractérisé par** une unité de communication au moyen de laquelle les valeurs déterminées par l'unité d'évaluation pour le débit massique et/ou le débit volumique peuvent être communiquées à une unité de gestion et/ou à une unité de commande supérieure.

11. Ventilateur selon l'une des revendications 1 à 10, **caractérisé en ce que** le moteur électrique est conçu comme un moteur à commutation électronique.

12. Procédé de détermination d'un flux de milieu déplacé par un ventilateur, en particulier un ventilateur selon l'une des revendications 1 à 11, le ventilateur (1) comprenant un moteur électrique (2) et une roue mobile (3) entraînée par le moteur électrique (2), le procédé comprenant les étapes suivantes :
détermination d'une différence de pression réelle (Δ p*) entre une première zone (10) et une seconde zone (13), la première zone (10) et/ou la seconde zone (13) étant formées dans le moteur électrique (2), une pression (p_{A}), qui correspond à une pression (p₁) présente côté admission, régnant dans la première zone (10), une pression (ps), qui correspond à une pression (p₂) présente côté échappement, régnant dans la seconde zone (13),
détermination d'une vitesse de rotation réelle (n) de la roue mobile (3), et
détermination d'un débit massique et/ou un débit volumique du flux de milieu sur la base de la différence de pression réelle (Δ p*), de la vitesse de rotation réelle (n) et d'une courbe caractéristique de pression du ventilateur (1),
**caractérisé en ce que**
une cloison étanche (11) qui est formée à l'intérieur du moteur électrique (3), empêche ou au moins réduit significativement la compensation de pression entre la première zone (10) et la seconde zone (13).

13. Procédé selon la revendication 12, **caractérisé en ce que** la courbe caractéristique de pression est déterminée pendant une mesure d'étalonnage du ventilateur (1) ou d'un ventilateur de même type.
